Europäisches Patentamt

European Patent Office

Office européen des brevets

(19)

(11) Veröffentlichungsnummer: **0 077 978**

**A1**

(12)

# EUROPÄISCHE PATENTANMELDUNG

(21) Anmeldenummer: **82109479.4**

(22) Anmeldetag: **13.10.82**

(51) Int. Cl.³: **A 62 D 3/00**
**G 21 F 9/16, C 02 F 1/28**

(30) Priorität: **26.10.81 DE 3142405**

(43) Veröffentlichungstag der Anmeldung:
**04.05.83 Patentblatt 83/18**

(84) Benannte Vertragsstaaten:
**DE GB SE**

(71) Anmelder: **REAKTOR-BRENNELEMENT UNION GmbH**
**Postfach 11 00 60**
**D-6450 Hanau 11(DE)**

(72) Erfinder: **Zastrow, Erich, Dr.**
**Johannesstrasse 11**
**D-8521 Bubenreuth(DE)**

(72) Erfinder: **Sondermann, Thomas**
**Freigerichterstrasse 14**
**D-8756 Kahl(DE)**

(72) Erfinder: **Kolb, Walter**
**Bayernstrasse 7**
**D-8756 Kahl(DE)**

(74) Vertreter: **Mehl, Ernst, Dipl.-Ing. et al,**
**Postfach 22 01 76**
**D-8000 München 22(DE)**

(54) **Verfahren zum Fixieren von in Wasser befindlichen Fremdstoffen.**

(57) Zum Fixieren von in Wasser befindlichen radioaktiven und/oder toxischen Fremdstoffen wird Siliziumgel als feste Fixiermasse verwendet.

EP 0 077 978 A1

Croydon Printing Company Ltd

REAKTOR-BRENNELEMENT
UNION GmbH

Unser Zeichen
VPA 81 P 8 5 4 5 E

Verfahren zum Fixieren von in Wasser
befindlichen Fremdstoffen

Die Erfindung betrifft ein Verfahren zum Fixieren von
in Wasser befindlichen Fremdstoffen durch Bilden eines
Siliziumgels als fester Fixiermasse.

Solche Verfahren sind bereits üblich beispielsweise bei
der Herstellung von Silikageltrockenmitteln. Hierbei wird
eine wäßrige Alkalisilikatlösung durch Puffermittel wie
beispielsweise Natriumbikarbonat in ein Siliziumgel überführt. Das Siliziumgel wirkt als Fixiermasse für das Puffermittel. Das Siliziumgel wird anschließend entwässert
und kann später als Trockenmittel verwendet wieder Wasser
aufnehmen.

Andererseits ist es bereits üblich, radioaktives Tritium,
das bei der Wiederaufarbeitung abgebrannter Kernreaktorbrennelemente in Abwasser anfällt, in hydraulischen Bindemitteln wie Zement oder zementähnlichen Substanzen zu
Lagerzwecken zu fixieren. Es sind auch anorganische Verbindungen wie beispielsweise Gips bekannt, in denen
tritiumhaltiges Wasser in Form von Kristallwasser eingelagert ist. Schließlich sind auch feste Kunststoffe bekannt, die beim Polimerisieren gebundenes tritiumhaltiges
Wasser fixieren.

Diese zum Fixieren von Tritium benutzten festen Substanzen
enthalten jedoch maximal nur 50 % tritiumhaltiges Wasser,
der Rest ist Fixiersubstanz. Deshalb haben diese festen
Substanzen auch ein verhältnismäßig großes Volumen. Ferner
können exotherme Abbindevorgänge beim Verfestigen der

W. 2 Shi / 22.10.1981

Substanzen dazu führen, daß bis zu 15 % des ursprünglich eingebrachten tritiumhaltigen Wassers wieder freigesetzt wird und beispielsweise beim Lagern der sich allmählich verfestigenden Substanz die Umgebung kontaminiert. Schließlich stört auch hoher Salzballast, insbesondere hoher Nitratballast im tritiumhaltigen Abwasser, da die verfestigten Fixiersubstanzen diesen Salzballast ebenfalls enthalten, der im Laufe der Zeit ihre feste Struktur zerstört.

Es ist ferner bekannt, in Abwasser enthaltenen, nicht flüchtige radioaktive Schadstoffe wie Radionuklide in einer Ausfällung zu fixieren, die eine chemische Verbindung der Schadstoffe mit dem Abwasser zugesetzten Chemikalien ist. Auch feste Ionentauscherstoffe, mit denen das Abwasser behandelt wird, können solche nicht flüchtigen radioaktiven Schadstoffe an sich binden.

Auf Grund der Lösungsgleichgewichte wird jedoch sowohl durch Zusetzen von Chemikalien zum Abwasser als auch beim Behandeln des Abwassers mit Ionentauscherstoffen nicht die Gesamtmenge der im Abwasser enthaltenen Schadstoffe entfernt, sondern im Abwasser verbleibt stets ein gelöster Rest. Ferner können auch hier hohe Salzballaste im Abwasser die Ausfällreaktion bzw. die Ionentauschreaktion stören.

Der Erfindung liegt die Aufgabe zugrunde, hier Abhilfe zu schaffen und nicht nur ein restloses Entfernen von radioaktiven und/oder toxischen Fremdstoffen aus Wasser, sondern auch ein restloses Binden dieser Fremdstoffe in einem festen Körper zu ermöglichen.

Zur Lösung dieser Aufgabe ist ein Verfahren er eingangs erwähnten Art erfindungsgemäß dadurch gekennzeichnet, daß das Siliziumgel als Fixiermasse für radioaktive und/oder toxische Fremdstoffe verwendet wird.

Das Siliziumgel wird günstigerweise durch Zusetzen eines Alkalisilikats zum Wasser gebildet. Sowohl tritiumhaltiges Wasser als auch nicht flüchtige, aber im Wasser enthaltene Fremdstoffe werden im Molekulargerüst des Siliziumgels restlos und rückstandslos und ohne nennenswerte Volumensvergrößerung des Siliziumgels eingebaut.

Siliziumgel kann nicht nur zum Fixieren von radioaktive und/oder toxische Fremdstoffe enthaltendem Abwasser verwendet werden, das beispielsweise aus Fertigungsprozessen für Kernreaktorbrennstoff stammt, sondern es kann auch zum Fixieren bereits vorhandener radioaktiver und/oder toxischer Fremdstoffe verwendet werden, die in Wasser gelöst oder aufgeschlemmt werden und dann beispielsweise zu Transport- oder Lagerzwecken in Siliziumgel als fester Fixiermasse fixiert werden.

Der Salzballast und der pH-Wert des Wassers, das als Siliziumgel fixiert werden soll, haben nur einen geringen Einfluß auf die Ausbildung dieses Siliziumgels, sofern der pH-Wert des Wassers nicht im extrem sauren oder extrem alkalischen Bereich liegt.

Das sich in kurzer Zeit als feste Fixiermasse bildende Siliziumgel stellt eine bedingt elastische Substanz dar, die normalen Lager- und Transportansprüchen genügt. Ihr Gehalt an gebundenem Wasser kann bis zu 99 Gew.-% betragen. Insbesondere wenn Siliziumgel als feste Fixiermasse für leicht flüchtiges Tritium dient, kann es daher ohne weiteres in einem luftdicht verschlossenem Lagerbehälter, der zweckmäßigerweise zuvor auch Reaktionsbehälter war, gelagert werden.

Das Wasserhaltevermögen des Siliziumgels ist abhängig vom Feuchtigkeitsgehalt der Umgebung, in der sich das Siliziumgel befindet. Bei feuchtigkeitsgesättigter Umgebung gibt
das Siliziumgel überhaupt kein Wasser ab, sondern es bleibt
stabil. Ferner zeigt es sich gegenüber wäßrigen Chemikalienlösungen, mit Ausnahme von Flußsäure, recht indifferent. So zeigt es beispielsweise gegenüber 10 %iger
Salzsäure und 10 %iger Natronlauge keine Veränderung während mehrerer Wochen. Siliziumgel mit in ihm fixierten
radioaktiven und/oder toxischen Fremdstoffen ist daher
auch für eine gefahrlose Seeversenkung in Doppelwandbehältern aus Kunststoff oder nichtrostendem Stahl geeignet.

Das Dosieren des Alkalisilikatzusatzes zum zu behandelnden, die radioaktiven und/oder toxischen Fremdstoffe enthaltenden Wasser wird erleichtert, wenn das Alkalisilikat
dem Wasser in Form einer wäßrigen Lösung zugesetzt wird.

Besonders günstig ist es, wenn dem Wasser Kalium- oder
Natriumsilikat (Wasserglas) zugesetzt wird.

Ferner ist es günstig, wenn das Alkalisilikat zu schwachalkalischem Wasser zugesetzt wird.

Vorteilhafterweise wird das die Fremdstoffe enthaltende
Wasser vor dem Zusetzen des Alkalisilikats auf einen pH-
Wert zwischen 7 und 8,5, vorzugsweise von 8, abgepuffert.

Die mechanische Festigkeit des als feste Fixiermasse für
radioaktive und/oder toxische Fremdstoffe gebildeten Siliziumgels kann vergrößert werden, wenn dem zu behandelnden, diese Fremdstoffe enthaltenden Wasser vor der Bildung
des Siliziumgels Kieselgur zugesetzt wird. Es ist günstig,
dem Wasser 1 bis 3 Gew.-%, vorzugsweise 2 Gew.-%, Kieselgur zuzusetzen.

Haben die im Siliziumgel fixierten radioaktiven und/oder toxischen Fremdstoffe einen niedrigen Dampfdruck, so kann das Siliziumgel zum Entfernen fast des gesamten in ihm gebundenen Wassers unter ganz erheblicher Volumenverringerung getrocknet werden, was bei normaler Raumtemperatur an Luft in flachen Behältern geschehen kann, die zweckmäßigerweise zugleich Reaktionsbehälter zum Ausbilden des Siliziumgels im die radioaktiven und/oder toxischen Fremdstoffe enthaltenden Wasser waren. Die aus dem Siliziumgel durch Trocknen entstehende feste Fixiermasse ist glasartig und nichtstaubend. Sie kann entweder aufgearbeitet oder auch direkt zur Endlagerung der in ihr fixierten radioaktiven und/oder toxischen Fremdstoffe eingelagert werden, während das vom Silizium abgedampfte Wasser völlig frei von Aerosolen und damit auch von im Siliziumgel fixierten radioaktiven und/oder toxischen Fremdstoffen ist und nach dem Kondensieren wieder verwendet werden kann. Auch ein beschleunigtes Trocknen durch Erwärmen des Siliziumgels bis zu 100°C ist ohne Zerstörung des Siliziumgels möglich.

In zwei Ausführungsbeispielen wurden eine mit Uranverbindungen kontaminierte 3-molare wäßrige Ammoniumnitratausgangslösung und eine 20 g Uran pro Liter enthaltende wäßrige Ausgangslösung von Ammoniumuranylkarbonat jeweils mit $NH_3$-Gas auf einen pH-Wert von 8 gepuffert. Diesen schwachalkalischen wäßrigen Ausgangslösungen wurden bei 20?C jeweils pro Liter wäßriger Ausgangslösung zwischen 8 bis 32 ml, vorzugsweise 16 ml wäßrige Natronwasserglaslösung mit ca. 80 g Na und 120 g Si pro Liter Wasserglaslösung zugesetzt und sofort gut verteilt. Nach etwa 2 Min. erstarrten jeweils die Lösungsgemische insgesamt fast schlagartig zu einem trockenen, festen, völlig klaren Siliziumgel, in dem das Ammoniumnitrat mit den Uranverbindungen bzw. das Ammoniumuranylkarbonat fixiert war.

9 Patentansprüche

<u>Patentansprüche</u>

1. Verfahren zum Fixieren von in Wasser befindlichen Fremdstoffen durch Bilden eines Siliziumgels als fester Fixiermasse, d a d u r c h g e k e n n z e i c h n e t , daß das Siliziumgel als Fixiermasse für radioaktive und/oder toxische Fremdstoffe verwendet wird.

2. Verfahren nach Anspruch 1, d a d u r c h g e - k e n n z e i c h n e t , daß das Siliziumgel durch Zusetzen eines Alkalisilikats zum Wasser gebildet wird.

3. Verfahren nach Anspruch 2, d a d u r c h g e - k e n n z e i c h n e t , daß das Alkalisilikat dem Wasser in Form einer wäßrigen Lösung zugesetzt wird.

4. Verfahren nach Anspruch 2, d a d u r c h g e - k e n n z e i c h n e t , daß dem Wasser Kalium- oder Natriumsilikat (Wasserglas) zugesetzt wird.

5. Verfahren nach Anspruch 2, d a d u r c h g e - k e n n z e i c h n e t , daß das Alkalisilikat zu schwach alkalischem Wasser zugesetzt wird.

6. Verfahren nach Anspruch 2, d a d u r c h g e - k e n n z e i c h n e t , daß das Wasser vor dem Zusetzen des Alkalisilikats auf einem pH-Wert zwischen 7 und 8,5, vorzugsweise von 8, abgepuffert wird.

7. Verfahren nach Anspruch 2, d a d u r c h g e - k e n n z e i c h n e t , daß dem Wasser vor der Bildung des Siliziumgels Kieselgur zugesetzt wird.

8. Verfahren nach Anspruch 7, d a d u r c h g e - k e n n z e i c h n e t , daß dem Wasser 1 bis 3 Gew.-%, vorzugsweise 2 Gew.-%, Kieselgur zugesetzt werden.

9. Verfahren nach Anspruch 1, d a d u r c h   g e -
k e n n z e i c h n e t ,   daß das Siliziumgel getrocknet wird.

**0077978**

Nummer der Anmeldung

**EUROPÄISCHER RECHERCHENBERICHT**

Europäisches
Patentamt

EP  82 10 9479

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | A 62 D 3/00 |
| P,X | CHEMICAL ABSTRACTS, Band 95, Nr. 20, 16. November 1981, Seite 377, Nr. 175135m, Columbus, Ohio, USA<br>& JP - A - 81 92499 (MITSUBISHI METAL CORP.) 27.07.1981 * Zusammenfassung * | 1-4 | G 21 F 9/16<br>C 02 F 1/28 |
| | --- | | |
| A | DE-A-2 228 938 (NUKEM)<br><br>* Insgesamt * | 1-4,7, 9 | |
| | --- | | |
| A | DE-A-2 559 724 (KERNFORSCHUNGSANLAGE JÜLICH GmbH)<br>* Insgesamt * | 1-4,9 | |
| | --- | | RECHERCHIERTE SACHGEBIETE (Int. Cl. 3) |
| A | DE-A-3 007 448 (IWAMOTO, TSUNEO, KOBE)<br>* Seite 11, Zeile 11 - Seite 14, Zeile 19; Ansprüche * | 1-5,9 | A 62 D<br>G 21 F<br>C 02 F |
| | ----- | | |

Der vorliegende Recherchenbericht wurde für alle Patentansprüche erstellt.

| Recherchenort<br>DEN HAAG | Abschlußdatum der Recherche<br>25-01-1983 | Prüfer<br>FLETCHER A.S. |
|---|---|---|